# EUROPÄISCHE PATENTANMELDUNG

(11) **EP 1 055 502 A1**
(43) Veröffentlichungstag der Anmeldung: **29.11.2000**
(21) Anmeldenummer: 00110823.2
(22) Anmeldetag: 20.05.2000
(51) Int. Cl.: B29C 45/66

(54) **Formschliesseinheit für eine Spritzgiessmaschine**

(30) Priorität: 25.05.1999 DE 19923849
(71) Anmelder: Hehl, Karl, 72290 Lossburg (DE)
(72) Erfinder: Hehl, Karl, 72290 Lossburg (DE)
(74) Vertreter: Reinhardt, Harry

(57) **Zusammenfassung**

Eine Formschließeinheit für eine Spritzgießmaschine weist zur Schließbewegung des beweglichen Formträgers (11) wenigstens zwei mehrgelenkige Kniehebelmechanismen (K) auf. Die beiden Kniehebelmechanismen (K) kommen beim Schließen der Spritzgießform (M) zumindest nahezu in Strecklage und sind mittels einer Treibplatte (18) miteinander gekoppelt. Ein exzenterisch wirkender Antrieb treibt die Treibplatte (18) an, dessen exzentrisch wirkende Bewegung dem Bewegungsablauf der Kniehebelmechanismen überlagert ist. Dadurch, daß der exzenterisch wirkende Antrieb mindestens zwei außermittig angeordneten Schubkurbeln (14) umfasst, die einen mittigen, an die Treibplatte (18) anschließenden Freiraum umgeben, ist es möglich, eine mit einem Kniehebelmechanismus ausgebildete Formschließeinheit nicht nur wirtschaftlich unter Ausnutzung der Vorteile von Kniehebel und Schubkurbel zu betreiben, sondern auch die für den Betrieb erforderliche Zugänglichkeit der Formschließeinheit zu gewährleisten.

## Beschreibung

Die Erfindung betrifft eine Formschließeinheit für eine Spritzgießmaschine zur Verarbeitung von Kunststoffen und anderen plastifizierbaren Massen wie pulvrigen, metallischen oder keramischen Massen nach dem Oberbegriff des Anspruches 1.

Bei einer dem Oberbegriff des Anspruches 1 zugrundeliegenden Formschließeinheit nach der DE 94 03 353 U1 wird ein Fünf-Punkt-Kniehebel bei Schließbewegung dadurch in Strecklage gebracht, das eine mittige Treibplatte durch einen Schubkurbelantrieb betätigt wird. Bei der Überführung in Strecklage bewegt sich die Treibplatte in Richtung auf den stationären Formträger, was zu einem nach außen Drücken der Schenkel des Kniehebels führt und diese in Strecklage überführt. Der Vorteil dieser Vorrichtung ist, das in Strecklage durch die elektromechanische Antriebseinheit kaum noch Energie aufgebracht werden muß, um den Kniehebel in Strecklage zu halten. Der am Kniehebelmechanismus angreifende exzentrisch wirkende Antrieb erlaubt während der Schließbewegung, wenn wenig Kraft zur Bewegung des beweglichen Formträgers aufgebracht werden muß, eine verhältnismäßig schnelle Bewegung, während er dann, wenn der Formschluß erreicht wird, bei entsprechender Winkelstellung des Exzenters weniger Geschwindigkeit und mehr Kraft aufbringt. Es können damit die kinematischen Bewegungsabläufe des exzentrisch wirkenden Antriebs und des Knieheblemachanismus überlagert werden, so daß je nach Wunsch z.B. zu Beginn der Bewegung eine hohe Kraft, während der Bewegung selbst jedoch weniger Kraft aber mehr Geschwindigkeit und gegen Ende der Bewegung wiederum eine hohe Kraft aufgebracht werden kann. Mit wenig Energie kann aufgrund dieser kinematischen der Formschluß optimal. Allerdings ist lediglich der Antrieb von zwei Kniehebeln mit einer Schubkurbel offenbart, so dass die Zugänglichkeit in der Mitte der Formschließeinheit, in der z.B. Auswerfereinheiten oder Kernzüge angeordnet werden müssen, eingeschränkt ist.

Aus dem DE 298 06 505 U1, der DT-PS 57953 und der DT-PS 59626 sind Schubkurbelantriebe teilweise auch in Verbindung mit Kniehebeln bekannt, wobei jedoch stets nur eine Schubkurbel eingesetzt wird, so dass auch hier stets die Zugänglichkeit behindert ist.

Gemäß der Fig. 1 der EP 0 164 419 B1 wird ein Fünf-Punkt-Kniehebel bei Schließbewegung dadurch in Strecklage gebracht, das eine mittige Treibplatte über eine Kugelrollspindel angetrieben wird, die ebenfalls mittig angeordnet ist. Bei der Überführung in Strecklage bewegt sich die Treibplatte in Richtung auf den stationären Formträger, was zu einem nach außen Drücken der Schenkel des Kniehebels führt und diese in Strecklage überführt. Der Vorteil dieser Vorrichtung ist, das in Strecklage durch die elektromechanische Antriebseinheit kaum noch Energie aufgebracht werden muß, um den Kniehebel in Strecklage zu halten. Allerdings bewegt sich die Kugelrollspindel mit gleichbleibender Geschwindigkeit während der gesamten Schließbewegung, so daß diese Formschließeinheit es nicht ausnutzt, daß während der Schließbewegung selbst mit geringerer Kraft gearbeitet werden kann als dann tatsächlich beim Formschluß und insbesondere beim Aufbringen der Schließkraft erforderlich ist. Diese lineare Bewegung ist insofern unwirtschaftlich.

Aus der EP 0 389 622 ist ebenfalls ein Kniehebelmechanismus bekannt, der über Kugelrollspindel in Strecklage überführt wird. Je zwei Kugelrollspindeln treiben über ein Joch zwei mittig angeordnete Kniehebel an, so daß ein entsprechend freier Zugang in der Mitte nicht gegeben ist. Auch hier ergibt sich eine unwirtschaftliche lineare Bewegung.

Ausgehend von diesem Stand der Technik liegt der vorliegenden Erfindung die Aufgabe zugrunde, eine mit einem Kniehebelmechanismus ausgebildete Formschließeinheit nicht nur wirtschaftlich unter Ausnutzung der Vorteile von Kniehebel und Schubkurbel zu betreiben, sondern auch die für den Betrieb erforderliche Zugänglichkeit der Formschließeinheit zu gewährleisten.

Diese Aufgabe wird durch eine Formschließeinheit mit den Merkmalen des Anspruches 1 gelöst.

Durch die Verwendung zweier exzentrisch wirkender Schubkurbeln mit mittigem Freiraum wird eine Zugänglichkeit dort geschaffen, wo sie erforderlich ist, nämlich im "Mittelbereich". Dieser 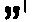 Mittelbereich" ist für den Einbau von Zusatz- und Peripheriegeräten, wie Auswerfer- oder Ausstoßeinheiten, von großer Wichtigkeit ist. Der Mehraufwand weiterer Schubkurbeln erleichtert die Zugänglichkeit, kann aber dennoch die beim Spritzgießen erforderliche Präzision gewährleisten.

Wird die Formschließeinheit nach den Ansprüchen 2 bis 4 ausgestaltet, befinden sich sämtliche Elemente des exzentrisch wirkenden Antriebs außerhalb des mittigen Bereiches, der als Einbauraum zur Auswerfereinheit erforderlich ist. Es ergibt sich damit eine große Offenheit für die üblicherweise zentral angeordnete Auswerfer- oder Ausstoßeinheit.

Weitere Vorteile ergeben sich aus den Unteransprüchen.

Im folgenden wird die Erfindung anhand eines in den beigefügten Figuren dargestellten Ausführungsbeispiels näher erläutert. Es zeigen:
- Fig. 1: eine teilweise im Bereich des Abstützelements geschnittene Seitenansicht der Formschließeinheit bei geöffneter Spritzgießform,
- Fig. 2: eine Darstellung gemäß Fig. 1 bei geschlossener Spritzgießform,
- Fig. 3: einen Schnitt nach Linie 3-3 vom Fig. 2, wobei im oberen Bereich zur besseren Darstellung das Abstützelement wegschnitten ist.

Die Figuren zeigen eine Formschließeinheit wie sie üblicherweise für eine Spritzgießmaschine und insbesondere für eine Spritzgießmaschine zur Verarbeitung von Kunststoffen und anderen plastifizierbaren Massen eingesetzt wird. Als andere plastifizierbare Massen kommen zum Beispiel pulvrige, metallisch oder keramische Massen in Betracht, die ebenfalls einem Spritzgußverfahren zugänglich sind.

Eine derartige Formschließeinheit besitzt üblicher Weise einen stationären Formträger 10, an den von einer Spritzgießeinheit ein Plastifizierzylinder P angelegt wird, um bei geschlossener Spritzgießform M plastifiziertes Material in einen Formhohlraum 21 einzuspritzen. Die Teile der Spritzgießform M sind am stationären Formträger 10 sowie an einem beweglichen Formträger 11 befestigt. Damit befinden sich die Teile der Spritzgießform M in einem Formspannraum zwischen den beiden Formträgern.

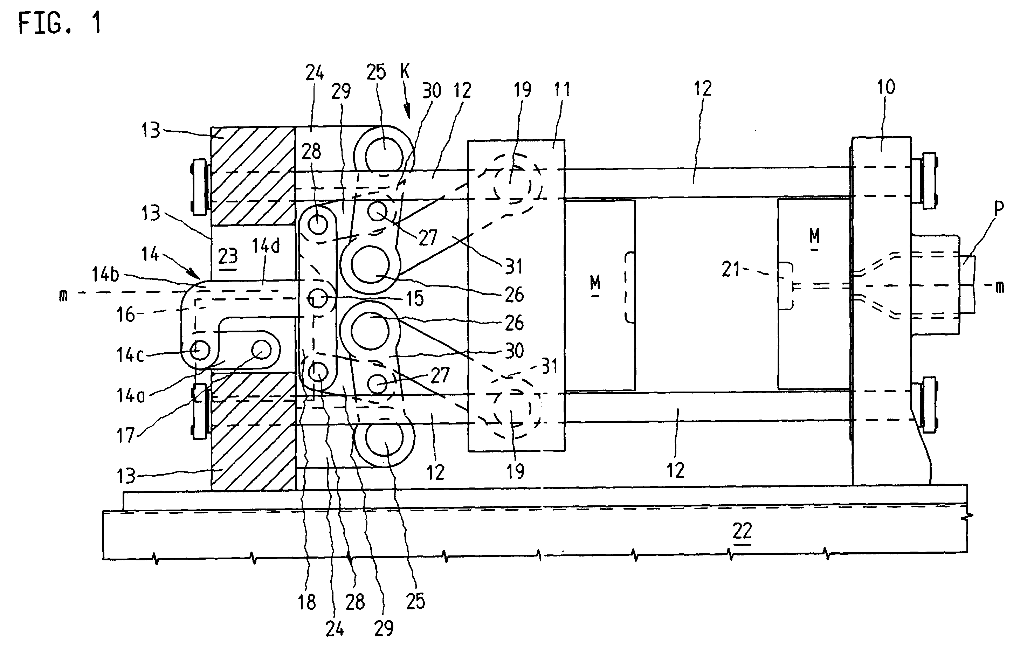

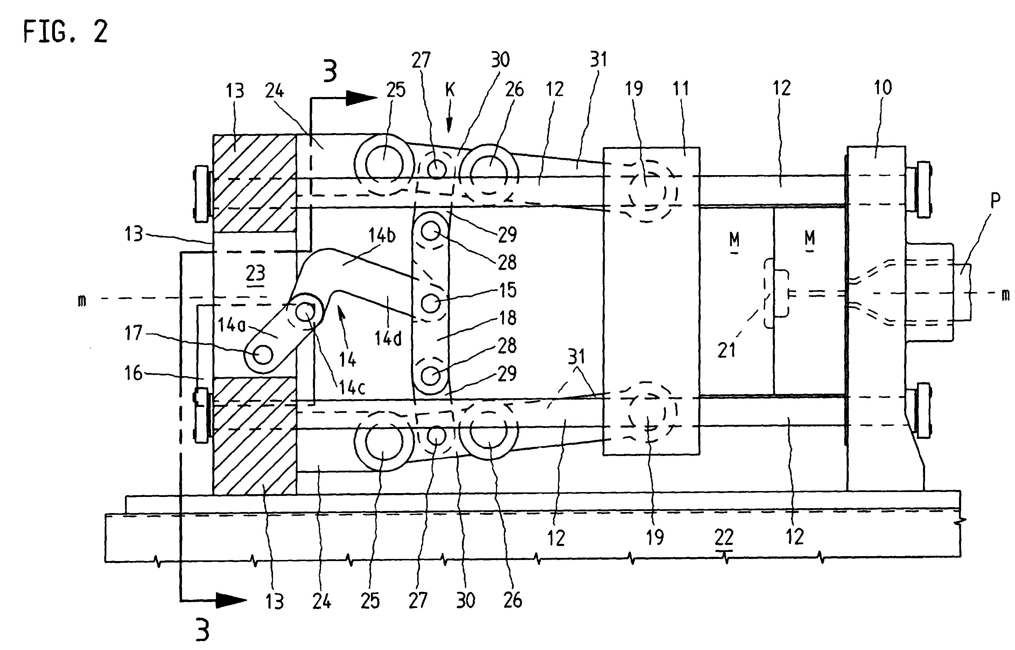

Zur Erzeugung der Schließbewegung ist wenigstens ein mehrgelenkiger Kniehebelmechanismus K vorgesehen, der die Teile der Spritzgießform M aufeinander zu und voneinander weg bewegt. Zum Schließen der Teile der Spritzgießform M wird der bewegliche Formträger 11 auf den stationären Formträger 10 zu bewegt, wobei sich die Stellung des Formschlusses gemäß Fig. 2 ergibt. Ist das plastifizierte Material in dieser Stellung in den Formhohlraum 21 eingespritzt und dort geformt worden, muß anschließend das Spritzteil ausgeworfen werden, wozu die Spritzgießform in eine Stellung gemäß Fig. 1 überführt wird, also geöffnet wird. Ein Vergleich zwischen Fig. 1 und 2 zeigt, daß sich der Kniehebelmechanismus K beim Formschluß im Hinblick auf seine Schenkel 30, 31 nahezu in Strecklage befindet, während dieselben Schenkel in Fig. 1 zusammengeschoben sind. Der Kniehebelmechanismus K stützt sich bei der Schließbewegung an wenigstens einem Abstützelement 13 ab.

Der bewegliche Formträger 11 ist an Führungselementen 12 geführt Sie durchgreifen den beweglichen Formträger 10 zur Führung, durchgreifen aber auch stationären Formträger 10 und Abstützelement 13, um dort die Kräfte in bekannter Weise auf diese Elemente zu übertragen. Im Ausführungsbeispiel handelt es sich bei den Führungselementen 12 um Führungsholme, die zugleich auch die Kraftübertragungselemente darstellen, mit denen die Kräfte, die insbesondere beim Aufbringen der Schließkraft entstehen, vom Abstützelement 13 auf den stationären Formträger 10 übertragen werden. Sind jedoch geeignete andere Führungselemente für den beweglichen Formträger 11 vorgesehen, so kann auch diese Funktionskopplung aufgelöst werden, mit anderen Worten kann dann ein Kraftübertragungselement vorgesehen werden, das z.B. um den Formspannraum herumgeführt wird. Derartige Kraftübertragungselemente sind in Form von Bügeln Stand der Technik.

Da der Kniehebelmechanismus nur aus gelenkig miteinander verbundenen Teilen besteht, ist zu seiner Betätigung ein gesondertes Antriebselement erforderlich. Als Antriebselement für den Kniehebelmechanismus K wird wenigstens ein exzentrisch wirkender Antrieb, im Ausführungsbeispiel eine Schubkurbel 14 eingesetzt, die bei der Schließbewegung aus der eingewinkelten Lage gemäß Fig. 1 nahezu in Strecklage gemäß Fig. 2 überführbar ist. Die Erzielung der Strecklage ist jedoch nicht erforderlich, vielmehr kann es zur Optimierung der Bewegung sogar erwünscht sein, die Schubkurbel nicht in die Strecklage zu bringen, da sich dies gegen Ende der Schließbewegung kaum noch in einer Bewegung des beweglichen Formträgers 11 bemerkbar macht. Wenn im folgenden nur noch von der Schubkurbel 14 als exzentrisch wirkenden Antrieb die Rede ist, so ist dies lediglich als Erläuterung eines vorteilhaften exzentrischen Antriebs zu verstehen. Es versteht sich von selbst, daß die Schubkurbel auch durch geeignete andere exzentrisch wirkende Antriebe ersetzt werden kann, sofern die erwünschte kinematische Überlagerung mit der Bewegung des Kniehebelmechanismus verwirklicht wird.

Der exzentrisch wirkende Antrieb wird im Hinblick auf seinen Bewegungsablauf der Bewegung des Kniehebelmechanismus überlagert. Dadurch wird während der Schließbewegung, wenn wenig Kraft zur Bewegung des beweglichen Formträgers aufgebracht werden muß, eine verhältnismäßig schnelle Bewegung möglich, während dann, wenn der Formschluß erreicht wird, bei entsprechender Winkelstellung des Exzenters weniger Geschwindigkeit und mehr Kraft aufgebracht werden kann. Je nach Wunsch kann z.B. zu Beginn der Bewegung eine hohe Kraft, während der Bewegung selbst jedoch weniger Kraft aber mehr Geschwindigkeit und gegen Ende der Bewegung wiederum eine hohe Kraft aufgebracht werden kann. Mit wenig Energie kann aufgrund dieser kinematischen der Formschluß beschleunigt und optimiert werden.

Damit gibt es drei Möglichkeiten, die Schließbewegung zu optimieren. Der Kniehebelmechanismus selbst kann z.B. auf den Zeitpunkt und die Lage der Strecklage optimiert werden. Ebenso kann der motorische Antrieb z.B. hinsichtlich seiner Drehzahl während der Schließbewegung z.B. durch eine Motorregelung optimiert werden. Ergänzend kann auch eine Optimierung am exzentrisch wirkenden Antrieb z.B. durch die Winkelstellung des Exzenters erfolgen, da damit z.B. gleichzeitig auch sein Totpunkt bestimmt wird. Bei der Schubkurbel 14 können ferner z.B. die Längen von Kurbelteil 14a und Treibelement 14b verstellbar sein oder es kann eines dieser Teile durch ein entsprechendes Teil andere Länge ersetzt werden.

Während die Schubkurbel 14 gemäß Fig. 1 sehr raumsparend angeordnet ist, kommt sie bei der Schließbewegung und insbesondere bei Formschluß in eine gestrecktere Lage, so daß der dort dargestellte Zustand in zweifacher Hinsicht mit wenig Energie aufrecht erhalten werden kann. Bei der Ausgestaltung gemäß dem Ausführungsbeispiel kann z.B. mit einem geringen Drehmoment an der Antriebswelle 17 die Schließkraft aufgebracht werden.

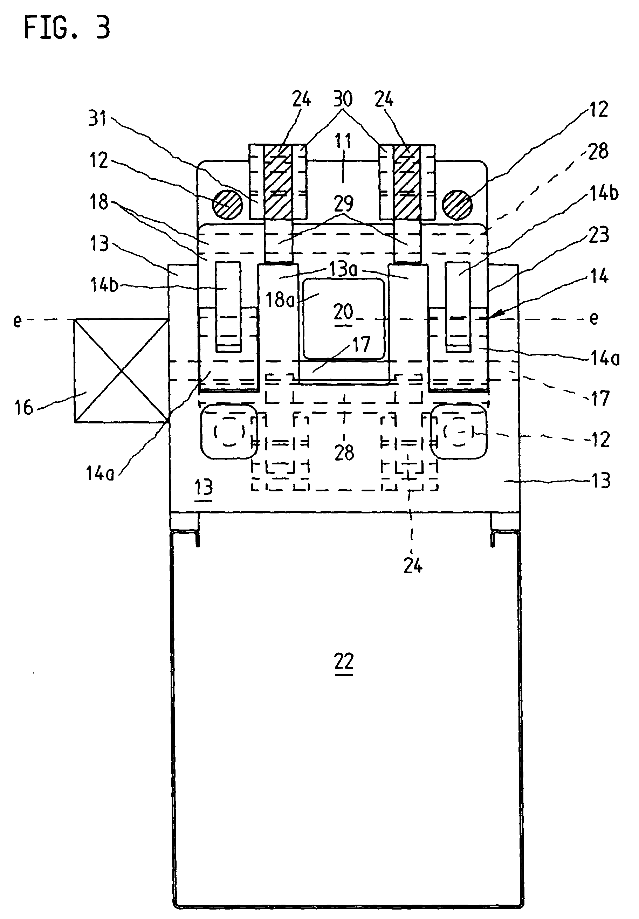

Der Antrieb der Schubkurbel erfolgt über die in Fig. 3 dargestellte Antriebseinheit 16, die eine Antriebswelle 17 antreibt. Diese Antriebswelle 17 steht in Verbindung mit dem Kurbelteil 14a von mehreren, hier zwei Schubkurbeln 14. Die Verwendung zweier Schubkurbeln hat Vorteile im Hinblick auf den in der Mitte gewünschten Freiraum. Das Kurbelteil 14a der Schubkurbel 14 ist gelenkig am Gelenkpunkt 14c mit dem Triebelement 14b verbunden. Das Triebelement ist L-förmig, wobei gemäß Fig. 1 bei geöffneter Spritzgießform der lange Schenkel 14d des Treibelements 14b etwa in einer durch die Mittellinie m-m gelegten horizontalen Ebene liegt. Bei dieser Anordnung kann die Schubkurbel 14 in einer Aussparung 23 des Abstützelements 13 angeordnet werden. Wird nun die Antriebswelle gedreht, so ergeben sich aufgrund der Winkelstellung Zustände, in denen über die Antriebswelle verhältnismäßig wenig Kraft aufgebracht werden kann. Diese Zustände treten insbesondere ein, wenn sich das Kurbelteil in einer 90°-Stellung befindet, also etwa vertikal steht. Zu diesem Zeitpunkt befindet sich der bewegliche Formträger 11 noch auf seinem Weg zum Formschluß, wofür er verhältnismäßig wenig Kraft benötigt. Andererseits kann bei der Drehbewegung des Kurbelteils 14a verhältnismäßig schnell der geöffnete Zustand in den geschlossenen Zustand der Spritzgießform M überführt werden. Damit findet aufgrund der Verwendung der Schubkurbel eine Optimierung sowohl bei der Bewegung als auch beim Aufbringen der Kraft statt.

Der platzsparende Aufbau der Schubkurbel gemäß Fig. 1 und 3 ermöglicht in der Mitte einen Freiraum 20 als Einbauraum für und Zugang zu einer Ausstoßeinheit zu schaffen. Die Bildung dieses Freiraums wird dadurch unterstützt, daß die Antriebswelle 17 außerhalb dieses Freiraums 20 angeordnet wird. Sie befindet sich unterhalb einer Mittellinie m-m bzw. unterhalb einer durch diese Mittellinie gelegten horizontalen Ebene e-e und behindert dadurch nicht den Zugang zur Mitte. Das von der Antriebswelle 17 angetriebene Kurbelteil 14a ist am Gelenkpunkt 14c gelenkig mit dem Treibelement verbunden, das andererseits gelenkig mit dem Kniehebelmechanismus am Gelenkpunkt 15 verbunden ist. Am Gelenkpunkt 15 ist eine Treibplatte 18 angelenkt, von der aus der Kniehebelmechanismus K mehrere symmetrisch zu einer Mittellinie m-m angeordnete Mehrgelenk-Kniehebel betätigt. Werden diese Mehrgelenk-Kniehebel über z.B. zwei symmetrisch zur Mittellinie angeordnete Schubkurbeln 14 betätigt, ergibt sich ein Bild gemäß Fig. 3, wobei die Schubkurbeln 14 in Aussparungen 23 des Abstützelements angeordnet sind. Diese Aussparungen 23 sind über Materialbrücken 13a von der mittigen Aussparung 20 beabstandet, die den Zugang zur Ausstoßeinheit ermöglicht.

Als Kniehebel-Mechanismus sind Fünf-Punkt-Kniehebel gemäß Fig. 1 und 2 vorgesehen. Es befinden sich im Ausführungsbeispiel auf jeder Seite zwei dieser Fünf-Punkt-Kniehebel, die symmetrisch zur durch die Mittellinie m-m gelegten Ebene e-e angeordnet sind und damit ebenfalls den Raum in der Mitte der Formschließeinheit frei machen. Zur Aussteifung des Systems ist die Treibplatte 18 so angeordnet, daß sie die damit vorhandenen vier Kniehebel gemeinsam betätigt. Um auch hier den Zugang zur Mitte zu ermöglichen, besitzt diese Treibplatte 18 eine mittige Aussparung 18a.

Bei Bewegung der Schubkurbel 14 wird die Treibplatte 18 in Richtung auf den stationären Formträger 10 bewegt. An der Treibplatte 18 sind Auslenkarme 29 an Gelenken 28 gelenkig angeordnet, die bei dieser Bewegung die Schenkel 30, 31 des Kniehebels in Strecklage bringen. Dazu greift der Gelenkarm 29 am Schenkel 30 an, an dem er über den Gelenkpunkt 27 angelenkt ist. Die Schenkel 30, 31 sind ihrerseits untereinander über den Gelenkpunkt 26 miteinander verbunden. Der Schenkel 30 ist über ein Gelenk 25 mit einer Abstützung 24 verbunden, die ihrerseits am Abstützelement 13 festgelegt ist. Der Schenkel 31 greift über Gelenkpunkte 19 am beweglichen Formträger an, wobei diese Gelenkpunkte etwa in Höhe der Führungselemente 12 angeordnet sind und damit im vorliegenden Fall etwa in Höhe der Kraftübertragungselemente, was sich sowohl bei der Bewegung als auch bei der Übertragung von evtl. entstehenden Kräften positiv auswirkt.

Um auch im Hinblick auf die Schubkurbel eine optimale Krafteinleitung zu erzielen, befinden sich diese etwa in der Vertikalprojektion der Führungselemente 12 jeweils zwischen zwei Führungselementen auf jeder Seite der Formschließeinheit.

### Liste der Bezugszeichen

- 10: stationärer Formträger
- 11: beweglicher Formträger
- 12: Führungselement
- 13: Abstützelement
- 13a: Materialbrücke
- 14: Schubkurbel
- 14a: Kurbelteil
- 14b: Treibelement
- 14c: Gelenkpunkt
- 14d: langer Schenkel
- 15: Gelenkpunkt
- 16: Antriebseinheit
- 17: Antriebswelle
- 18: Treibplatte
- 19: Gelenkpunkt
- 20: mittige Aussparung
- 21: Formhohlraum
- 22: Maschinenfuß
- 23: Aussparung für 14
- 24: Abstützung
- 25,26,27,28: Gelenkpunkt
- 29: Auslenkarm
- 30,31: Schenkel
- e-e: Ebene durch m-m
- m-m: Mittellinie
- K: Kniehebelmechanismus
- M: Spritzgießform
- P: Plastifizierzylinder

## Patentansprüche

1. Formschließeinheit für eine Spritzgießmaschine zur Verarbeitung von Kunststoffen und anderen plastifizierbaren Massen mit
- einem stationären Formträger (10),
- einem beweglichen Formträger (11),
- einer Spritzgießform (M), deren Teile zwischen beweglichen Formträger (11) und stationären Formträger (10) aufnehmbar sind,
- wenigstens zwei mehrgelenkigen Kniehebelmechanismen (K) zur Schließbewegung für den beweglichen Formträger (11) auf den stationären Formträger (10) zu unter Schließen der Teile der Spritzgießform (M) (Formschluß) und vom stationären Formträger (10) weg unter Öffnen der Spritzgießform (M), wobei die beiden Kniehebelmechanismen (K) beim Schließen der Spritzgießform (M) zumindest nahezu in Strecklage kommen und mittels einer Treibplatte (18) miteinander gekoppelt sind,
- wenigstens einem Abstützelement (13) zur Abstützung der Kniehebelmechanismen (K) bei der Schließbewegung,
- wenigstens einem Kraftübertragungselement zur Übertragung der beim Formschluß entstehenden Kräfte zwischen stationärem Formträger (10) und Abstützelement (13),
- einem exzenterisch wirkenden Antrieb zur Beaufschlagung der Treibplatte (18), dessen exzentrisch wirkende Bewegung dem Bewegungsablauf der Kniehebelmechanismen überlagert ist,
dadurch gekennzeichnet, daß der exzenterisch wirkende Antrieb mindestens zwei außermittig angeordneten Schubkurbeln (14) umfasst, die einen mittigen, an die Treibplatte (18) anschließenden Freiraum umgeben.

2. Formschließeinheit nach Anspruch 1, dadurch gekennzeichnet, dass Kniehebelmechnismen (K) und Schubkurbeln (14) symmetrisch bezüglich der senkrechten Mittelebene der Spritzgießmaschine sind.

3. Formschließeinheit nach Anspruch 1 oder 2, dadurch gekennzeichnet, daß die Schubkurbeln (14) von einer Antriebseinheit (16) über eine außerhalb einer Mittellinie (m-m) der Formschließeinheit angeordnete Antriebswelle (17) angetrieben ist.

4. Formschließeinheit nach Anspruch 3, dadurch gekennzeichnet, daß die Antriebswelle (17) jeweils ein Kurbelteil (14a) der Schubkurbeln (14) antreibt, das jeweils am Gelenkpunkt (14c) gelenkig mit einem Treibelement (14b) verbunden ist, das andernends gelenkig mit der Treibplatte (18) am Gelenkpunkt (15) verbunden ist.

5. Formschließeinheit nach einem der Ansprüche 1 bis 4, dadurch gekennzeichnet, daß die Kniehebelmechanismen (K) Fünf-Punkt-Kniehebel sind.

6. Formschließeinheit nach einem der Ansprüche 1 bis 5, dadurch gekennzeichnet, daß die Treibplatte (18) eine mittige Aussparung (18a) aufweist.

7. Formschließeinheit nach einem der Ansprüche 1 bis 6, dadurch gekennzeichnet, daß die Führungselemente (12) zugleich als Kraftübertragungselemente ausgebildet sind.

8. Formschließeinheit nach einem der vorhergehenden Ansprüche, dadurch gekennzeichnet, daß die Schubkurbeln (14) im wesentlichen innerhalb der Vertikalprojektion der Führungselemente (12) zwischen zwei Führungselementen auf beiden Seiten der Formschließeinheit angeordnet sind.

9. Formschließeinheit nach einem der Ansprüche 1 bis 8, dadurch gekennzeichnet, daß die Gelenkpunkte (19) zur Anlenkung des Kniehebelmechanismus (K) am beweglichen Formträger (11) etwa in Höhe der Führungselemente (12) angeordnet sind.

10. Formschließeinheit nach einem der Ansprüche 1 bis 9, dadurch gekennzeichnet, daß bei geöffneter Spritzgießform (M) der lange Schenkel (14d) des L-förmigen Treibelements (14b) etwa in einer durch die Mittellinie (m-m) gelegten horizontalen Ebene liegt.
